# EUROPÄISCHE PATENTANMELDUNG

(11) **EP 3 761 166 A1**
(43) Veröffentlichungstag der Anmeldung: **06.01.2021**
(21) Anmeldenummer: 19184575.9
(22) Anmeldetag: 05.07.2019
(51) Int. Cl.: G06F 8/60, G06F 9/451, G06F 9/50

(54) **VERFAHREN ZUM VERWALTEN EINES FELDGERÄTS UND AUTOMATISIERUNGSSYSTEM**

(71) Anmelder: Siemens Aktiengesellschaft, 80333 München (DE)
(72) Erfinder: Bode, Sebastian, 59229 Ahlen (DE)

(57) **Zusammenfassung**

Verfahren zum Verwalten eines Feldgeräts (100), mit: Bereitstellen (S1) einer Beschreibung (BF) des Feldgeräts (100), welche Ressourcen (101 - 108) des Feldgeräts (100) umfasst,
Bereitstellen (S2) einer Beschreibung (BV) einer anzuwendenden Verwaltungsoperation, welche von der anzuwendenden Verwaltungsoperation benötigte Ressourcen (101 - 108) umfasst, Erfassen (S3) eines aktuellen Zustands (Z0) des Feldgeräts (100), welcher von angewendeten Verwaltungsoperationen abhängt,
Ermitteln (S4) einer Kompatibilität (K) der anzuwendenden Verwaltungsoperation mit dem Feldgerät (100) in Abhängigkeit der Beschreibung (BF) des Feldgeräts (100), der Beschreibung (BV) der anzuwendenden Verwaltungsoperation und des aktuellen Zustands (Z0) des Feldgeräts (100), und
Anwenden (S5) der anzuwendenden Verwaltungsoperation in Abhängigkeit der ermittelten Kompatibilität (K).

Dieses Verfahren ermöglicht es vorteilhaft, Containertechnologie für Software einzusetzen, die für ihre korrekte Funktion direkten Zugriff auf Hardwareschnittstellen und/oder spezifische Hardwarefunktionalitäten benötigt.

## Beschreibung

Die vorliegende Erfindung betrifft ein Verfahren zum Verwalten eines Feldgeräts sowie ein Automatisierungssystem.

Im Bereich des Cloud-Computing ist es bekannt, dass eine Containerorchestrierungssoftware vollautomatisch eine Anwendung, die mehrere in jeweils einem Container vorliegenden Dienste nutzt, auf unterschiedliche Server oder Hosts des Cloud-Computing Netzwerks verteilt und dort je nach verfügbaren Ressourcen ausführt. Dies ermöglicht eine hohe Flexibilität sowie eine optimierte Lastverteilung und damit Effizienz des Gesamtsystems.

Bei Automatisierungssystemen, die beispielsweise durch eine Anzahl von Feldgeräten gebildet werden, ist eine solche Funktionalität nicht bekannt. Hier werden die Anwendungen, die von einem jeweiligen Feldgerät ausgeführt werden, jeweils individuell angepasst und eine Zuordnung von Ressourcen des Feldgeräts wird manuell, beispielsweise durch einen Operator, vorgenommen.

Vor diesem Hintergrund besteht eine Aufgabe der vorliegenden Erfindung darin, ein verbessertes Verfahren zum Verwalten eines Feldgeräts bereitzustellen.

Gemäß einem ersten Aspekt wird ein Verfahren zum Verwalten eines Feldgeräts vorgeschlagen. In einem ersten Schritt wird eine Beschreibung des Feldgeräts, welche Ressourcen des Feldgeräts umfasst, bereitgestellt. In einem zweiten Schritt wird eine Beschreibung einer anzuwendenden Verwaltungsoperation, welche von der anzuwendenden Verwaltungsoperation benötigte Ressourcen umfasst, bereitgestellt. In einem dritten Schritt wird ein aktueller Zustand des Feldgeräts, welcher von angewendeten Verwaltungsoperationen abhängt, erfasst. In einem vierten Schritt wird eine Kompatibilität der anzuwendenden Verwaltungsoperation mit dem Feldgerät in Abhängigkeit der Beschreibung des Feldgeräts, der Beschreibung der anzuwendenden Verwaltungsoperation und des aktuellen Zustands des Feldgeräts ermittelt. In einem fünften Schritt wird die anzuwendende Verwaltungsoperation in Abhängigkeit der ermittelten Kompatibilität angewendet.

Dieses Verfahren ermöglicht es vorteilhaft, Containertechnologie für Software einzusetzen, die für ihre korrekte Funktion direkten Zugriff auf Hardwareschnittstellen und/oder spezifische Hardwarefunktionalitäten benötigt. Unter Containertechnologie wird hierbei verstanden, dass eine bestimmte Funktionalität in einem Container definiert vorliegt, wobei unter Verwendung beispielsweise einer Containerorchestrierungssoftware die Funktionalität auf einem Feldgerät installiert und damit bereitgestellt wird. Dies geschieht vorzugsweise vollautomatisch, wobei bei Funktionalitäten, die eine Nach- oder Umrüstung des Feldgeräts benötigen, auch eine Operatorinteraktion vorgesehen sein kann. Damit kann ein Automatisierungssystem so flexibel einsetzbar sein, wie es von Cloud-Computing Systemen in Bezug auf die Ausführung von Software bekannt ist. Insbesondere lässt sich mit diesem Verfahren ein ganzes Automatisierungssystem verwalten, so dass für neue Funktionalitäten gar kein oder nur ein minimaler Aufwand seitens eines Operators zu deren Bereitstellung erforderlich ist. Insbesondere ist es nicht nötig, den Zustand eines Feldgeräts manuell zu erfassen, eine Kompatibilität eines Feldgeräts mit einer bestimmten Funktionalität oder Verwaltungsoperation manuell zu prüfen sowie Einstellungen an einem Feldgerät manuell vorzunehmen.

Das vorgeschlagene Verfahren arbeitet ausschließlich basierend auf Beschreibungen von Hardware, wie den Feldgeräten und gegebenenfalls zusätzlichen Elementen, und Software, wie der anzuwendenden Verwaltungsoperation. Dies ermöglicht auch die Verwaltung von Feldgeräten, für die der Hersteller die Beschreibung nicht in dem benötigten Format (oder in der benötigten Version des Formats) zu Verfügung stellt, weil diese auch durch Dritte bereitgestellt oder selbst erzeugt werden kann. Interne Abhängigkeiten eines Feldgeräts werden beispielsweise in einem Handbuch beschrieben, was zum Beispiel als Grundlage für die Beschreibung des jeweiligen Feldgeräts dienen kann. Die Beschreibung kann hierbei auch teilautomatisiert erzeugt werden.

Unter dem Verwalten eines Feldgeräts wird vorliegend jede Aktion oder Operation verstanden, durch die sich ein Zustand oder eine Konfiguration des Feldgeräts ändert. Beispielsweise kann ein Feldgerät hardwaremäßig verwaltet werden, indem ein Bauteil, wie eine Betriebsleuchte, ein Werkzeug oder dergleichen, hinzugefügt, entfernt und/oder verändert wird. Weiterhin kann ein Feldgerät softwaremäßig verwaltet werden, indem beispielsweise eine Firmware aktualisiert, ein Betriebsprogramm hinzugefügt oder entfernt und/oder eine in Software implementierte Funktion hinzugefügt oder entfernt wird.

Unter einem Feldgerät wird vorliegend insbesondere eine hardwaremäßig ausgebildete Einheit verstanden, die eine bestimmte Funktionalität aufweist oder bereitstellt. Beispiele für Feldgeräte sind Produktionsanlagen, Messgeräte, Computer und dergleichen mehr. Derartige Feldgeräte umfassen insbesondere Steuerrechner oder Mikrocontroller, wie beispielsweise ein Field-programmable Gate Array (FPGA), die gewisse Ressourcen sowie Verknüpfungen oder Relationen zwischen Ressourcen aufweisen können. Ein Feldgerät kann dabei eine einzelne Steuerung oder ein einzelnes Gerät sein. Ein Feldgerät kann aber auch eine Vielzahl an Steuerungen oder funktionalen Einheiten aufweisen, wie beispielsweise ein Steuerschrank, die beispielsweise strukturell verbunden sind und/oder funktionell zusammenwirken. Dann kann eine jede Steuerung oder funktionale Einheit, die in dem Feldgerät zusammengefasst sind, als ein mit den weiteren Steuerungen oder funktionalen Einheiten verknüpftes und/oder abhängiges Feldgerät aufgefasst werden. Die Beschreibung eines jeweiligen Feldgeräts umfasst die Ressourcen, die das Feldgerät aufweist. Beispielsweise kann ein Feldgerät eine bestimmte Anzahl an physischen Ausgängen aufweisen, eine bestimmte Rechenkapazität, eine bestimmte Speicherkapazität, eine maximale Taktfrequenz, zugeordnete Einheiten wie ein Netzwerkadapter und dergleichen mehr. Die Beschreibung enthält vorzugsweise alle Ressourcen, die das Feldgerät aufweist. Die Beschreibung des Feldgeräts kann aber auch nur eine Teilmenge der tatsächlich verfügbaren Ressourcen umfassen. Beispielsweise können vorhandene Ressourcen, die für den Betrieb des Feldgeräts reserviert sind, in der Beschreibung nicht aufgeführt sein. Unter Ressourcen werden hierbei auch einstellbare Parameterwerte, feste Parameterwerte sowie Abhängigkeiten unter mehreren Ressourcen verstanden, die entsprechend in der Beschreibung enthalten sind. Beispielsweise kann ein Prozessor mit einer Taktfrequenz betrieben werden, die aus einem Grundtakt mittels eines Multiplikators gebildet wird, wobei der Multiplikator nur gewisse vorgegebene Werte annehmen kann. Dann sind sowohl der Grundtakt, die möglichen Multiplikatorwerte, sowie der Zusammenhang zwischen Grundtakt und Multiplikator in der Beschreibung angegeben.

Beispielsweise ist eine Taktfrequenz einer Schnittstelle zur digitalen Datenübertragung, wie eine serielle Schnittstelle, von einem solchen vorgegebenen oder vorgebbaren Grundtakt abgeleitet. Daher kann eine Abhängigkeit zwischen einem Prozessortakt und einem Schnittstellentakt bestehen.

Die Beschreibung des Feldgeräts wird vorzugsweise von einem Hersteller des Feldgeräts bereitgestellt. Dies kann beispielsweise durch Zugriff auf eine Herstellerdatenbank erfolgen, die Beschreibungen der von dem Hersteller hergestellten Feldgeräte umfasst. Das Feldgerät kann beispielsweise durch eine Seriennummer identifiziert werden. Die Beschreibung des Feldgeräts ist vorzugsweise auf dem Feldgerät selbst hinterlegt. Die Beschreibung des Feldgeräts kann alternativ oder zusätzlich durch einen Operator des Feldgeräts bereitgestellt werden. Insbesondere kann die Beschreibung des Feldgeräts auch dynamisch bereitgestellt werden, beispielsweise indem einzelne Bausteine des Feldgeräts identifiziert werden und die Integration der einzelnen Bausteine zu dem Feldgerät ermittelt wird.

Eine Verwaltungsoperation umfasst ein Verwalten des Feldgeräts. Eine Verwaltungsoperation kann als eine Funktionalität des Feldgeräts verstanden werden. Wenn eine Verwaltungsoperation angewendet wurde, dann weist das Feldgerät anschließend die von der Verwaltungsoperation bereitgestellte Funktionalität auf. Beispielsweise umfasst die Verwaltungsoperation die Installation einer Software auf einem Feldgerät. Beispielsweise soll ein Messgerät konfiguriert werden, das ein analoges Eingangssignal digitalisiert, eine bestimmte Funktion auf die digitalisierten Messwerte anwendet, und die abgeleiteten Messwerte ausgibt. Die Beschreibung der Verwaltungsoperation umfasst dann die Software mit der anzuwendenden Funktion sowie eine hardwaremäßige Konfiguration des Feldgeräts.

Die Beschreibung der anzuwendenden Verwaltungsoperation kann beispielsweise durch einen Operator bereitgestellt oder einer Bibliothek von Verwaltungsoperationen entnommen werden. Insbesondere kann die Beschreibung einer Verwaltungsoperation derart bereitgestellt werden, dass die erforderliche oder gewünschte Funktionalität definiert wird und anschließend automatisch eine Beschreibung der Verwaltungsoperation erzeugt wird, beispielsweise indem grundlegende Verwaltungsoperationen hintereinandergeschaltet oder verknüpft werden. Eine individuelle Anpassung der so erzeugten Verwaltungsoperation kann beispielsweise durch den Operator erfolgen.

Der aktuelle Zustand des Feldgeräts hängt insbesondere von den angewendeten Verwaltungsoperationen ab. Durch angewendete Verwaltungsoperationen werden Ressourcen benötigt, welche für weitere Verwaltungsoperationen nicht oder nicht uneingeschränkt zur Verfügung stehen. Einmal angewendete Verwaltungsoperationen lassen sich durch eine entsprechende Verwaltungsoperation auch wieder entfernen, wobei dann die von der ursprünglich angewendeten Verwaltungsoperation benötigten Ressourcen wieder freigegeben werden. Das Erfassen des aktuellen Zustands kann beispielsweise durch ein Auslesen des Feldgeräts erfolgen. Man kann auch sagen, der aktuelle Zustand des Feldgeräts wird ermittelt.

Wenn der aktuelle Zustand erfasst wurde, wird eine Kompatibilität der anzuwendenden Verwaltungsoperation mit dem Feldgerät in Abhängigkeit der Beschreibung des Feldgeräts, der Beschreibung der anzuwendenden Verwaltungsoperation und des aktuellen Zustands des Feldgeräts ermittelt. Das Ergebnis dieses Ermittelns kann ein "Ja", ein "Nein" oder auch ein "bedingtes Ja" als Antwort auf die Frage, ob die anzuwendende Verwaltungsoperation mit dem Feldgerät kompatibel ist, sein.

Wenn die anzuwendende Verwaltungsoperation mit dem Feldgerät kompatibel ist, dann kann die Verwaltungsoperation auf dem Feldgerät angewendet werden, was gemäß dem fünften Schritt des Verfahrens erfolgt.

Wenn die anzuwendende Verwaltungsoperation mit dem Feldgerät nicht kompatibel ist, dann kann die Verwaltungsoperation auf dem Feldgerät nicht angewendet werden.

Wenn die anzuwendende Verwaltungsoperation mit dem Feldgerät bedingt kompatibel ist, dann kann die Verwaltungsoperation beispielsweise grundsätzlich anwendbar sein, aber möglicherweise nicht ausgehend von dem aktuellen Zustand des Feldgeräts. In diesem Fall ist beispielsweise zunächst eine andere Verwaltungsoperation oder eine Kette von Verwaltungsoperationen anzuwenden, bis die anzuwendende Verwaltungsoperation angewendet werden kann.

Das Verfahren wird vorzugsweise durch eine für ein Automatisierungssystem mit einer Anzahl von Feldgeräten zentralen Instanz durchgeführt, wie beispielsweise einem Zentralrechner. Gemäß einer Ausführungsform des Verfahrens ist das Feldgerät in eine Cloud-Computing-Umgebung eingebunden.

Eine Cloud-Computing-Umgebung zeichnet sich beispielsweise durch eine Vernetzung der darin eingebundenen Elemente aus. Diese sind insbesondere zur Kommunikation untereinander eingerichtet, können also beispielsweise Daten, Meldungen und/oder Anfragen untereinander austauschen.

Vorzugsweise weist jedes Feldgerät in der Cloud-Computing-Umgebung eine eindeutige Kennung auf, beispielsweise eine Netzwerkadresse oder eine MAC-Adresse, so dass es von den weiteren Teilnehmern der Cloud-Computing-Umgebung erkannt und direkt angesprochen werden kann. In Ausführungsformen können auch Unternetze innerhalb der Cloud-Computing-Umgebung existieren, wobei die in einem Unternetz enthaltenen Feldgeräte beispielsweise über einen gemeinsamen Zugriffpunkt (Access-Point) mit den Feldgeräten außerhalb des Unternetzes kommunizieren können.

Die Einbindung der Feldgeräte in eine Cloud-Computing-Umgebung weist den Vorteil auf, dass aus dem Bereich des Cloud-Computing bekannte Lösungen, wie beispielsweise Containerorchestrierungssoftware, in dem vorliegenden Verfahren verwendet werden können, was ein hohes Einsparpotenzial bietet.

Gemäß einer weiteren Ausführungsform des Verfahrens wird zum Ermitteln der Kompatibilität ein Vergleich von freien Ressourcen des Feldgeräts mit von der anzuwendenden Verwaltungsoperation benötigten Ressourcen durchgeführt.

Die freien Ressourcen eines Feldgeräts lassen sich beispielsweise ermitteln, indem die Differenz zwischen der Beschreibung des Feldgeräts, die insbesondere alle Ressourcen des Feldgeräts aufweist, und dem erfassten aktuellen Zustand des Feldgeräts, der insbesondere alle derzeit genutzten Ressourcen aufweist, gebildet wird. Wenn alle von der anzuwendenden Verwaltungsoperation benötigten Ressourcen auf dem Feldgerät frei sind, dann ist das Ergebnis des Vergleichs positiv und die anzuwendende Verwaltungsoperation kann angewendet werden.

Gemäß einer weiteren Ausführungsform des Verfahrens wird zum Ermitteln der Kompatibilität ein Vergleich aller Ressourcen des Feldgeräts mit allen Ressourcen, die von angewendeten Verwaltungsoperationen und der anzuwendenden Verwaltungsoperation benötigt werden, durchgeführt.

Dies ist vorteilhaft, da sich bei einem solchen Vergleich beispielsweise ermitteln lässt, ob das Feldgerät über genügend Ressourcen verfügt, um sowohl die bereits angewendeten Verwaltungsoperationen, als auch die neu anzuwendende Verwaltungsoperation auszuführen. Insbesondere lässt sich hiermit ein Optimierungspotential ausschöpfen, indem das Feldgerät umkonfiguriert wird. Vorzugsweise lässt sich hiermit eine Kompatibilität mit der anzuwendenden Verwaltungsoperation erreichen, indem früher angewendete Verwaltungsoperationen ganz oder teilweise rückgängig gemacht werden und/oder mit anderen Parametern angewendet werden. Dies kann auch als Greenfield-Ansatz bezeichnet werden.

Beispielsweise umfasst das Feldgerät zwei Ausgänge, die frei konfigurierbar sind, und zwei weitere Ausgänge, die miteinander gekoppelt sind und jeweils gleich konfiguriert sind. Bei einer ersten angewendeten Verwaltungsoperation wurde der erste der frei konfigurierbaren Ausgänge konfiguriert. Bei zwei weiteren Verwaltungsoperationen wurde der zweite frei konfigurierbare Ausgang gleich wie der erste frei konfigurierbare Ausgang konfiguriert und einer der miteinander gekoppelten Ausgänge wurde konfiguriert, allerdings unterschiedlich zu den anderen beiden Ausgängen. Damit ist nun auch der vierte Ausgang konfiguriert. Die anzuwendende Verwaltungsoperation benötigt einen Ausgang, allerdings mit einer unterschiedlichen Konfiguration. Würden nun lediglich die freien Ressourcen mit den benötigten Ressourcen verglichen, so würde das Feldgerät als inkompatibel erscheinen, da kein Ausgang verfügbar ist, der entsprechend konfiguriert werden kann. Durch den Vergleich aller benötigten Ressourcen kann ermittelt werden, dass das Feldgerät die benötigten Ressourcen aufweist. Dann kann durch eine Umkonfiguration Kompatibilität hergestellt werden. Vorliegend würden beispielsweise die ersten beiden Verwaltungsoperationen, die jeweils einen Ausgang mit der gleichen Konfiguration benötigen, auf die beiden gekoppelten Ausgänge gelegt werden, so dass die frei konfigurierbaren Ausgänge frei werden und von den beiden weiteren Verwaltungsoperationen beansprucht werden können.

In Ausführungsformen des Verfahrens wird in Abhängigkeit der ermittelten Kompatibilität eine Optimierungsmaßnahme ermittelt, wobei die Optimierungsmaßnahme ein Umkonfigurieren des Feldgeräts umfasst.

In weiteren Ausführungsformen des Verfahrens umfasst die anzuwendende Verwaltungsoperation das Ermitteln einer Optimierungsmaßnahme, wobei die Optimierungsmaßnahme eine Optimierung des Feldgeräts unter einem bestimmten Gesichtspunkt umfasst, und das Anwenden der Verwaltungsoperation umfasst das Optimieren des Feldgeräts. Gesichtspunkte, unter denen das Feldgerät optimiert werden kann, umfassen einen Energieverbrauch, eine Produktionsgeschwindigkeit, eine Reaktionsgeschwindigkeit, und/oder eine Sicherheit des Feldgeräts.

Weiterhin können Optimierungsmaßnahmen unter Berücksichtigung einer Mehrzahl von in einem Automatisierungssystem angeordneten Feldgeräten ermittelt werden. Dabei ist es insbesondere möglich, dass Verwaltungsoperationen von einem Feldgerät auf ein anderes Feldgerät der Mehrzahl verschoben oder verlegt werden, um eine Optimierung zu erzielen.

Gemäß einer weiteren Ausführungsform des Verfahrens umfasst das Erfassen des aktuellen Zustands des Feldgeräts ein Abfragen des Feldgeräts und/oder ein Auswerten einer Log-Datei. Beispielsweise kann ein Status-Request an das Feldgerät übertragen werden, woraufhin das Feldgerät eine entsprechende Status-Meldung an das anfragende Gerät überträgt. Dies kann auch als Polling bezeichnet werden.

Vorteilhaft wird eine Log-Datei vorgehalten, die zumindest für den aktuellen Status indikativ ist. Die Log-Datei kann auf dem Feldgerät selbst oder von einer zentralen Instanz, die zur Verwaltung des Feldgeräts oder einer Anzahl von Feldgeräten in einem Automatisierungssystem eingerichtet ist, vorgehalten werden.

Gemäß einer weiteren Ausführungsform des Verfahrens umfasst die Log-Datei den aktuellen Zustand des Feldgeräts, wenigstens einen früheren Zustand des Feldgeräts oder eine Sequenz früherer Zustände des Feldgeräts.

Vorzugsweise sind aus der Log-Datei beispielsweise alle Verwaltungsoperationen, die an dem Feldgerät angewendet wurden, ersichtlich. Hierunter fällt insbesondere auch das Löschen oder Entfernen einer Verwaltungsoperation. Die Log-Datei kann vorzugsweise auch weitere Informationen, beispielsweise einen Zeitstempel einer jeweiligen Verwaltungsoperation und/oder einen Operator, der die jeweilige Verwaltungsoperation angewendet hat, enthalten.

Gemäß einer weiteren Ausführungsform des Verfahrens umfasst das Anwenden der anzuwendenden Verwaltungsoperation ein Auswählen genau einer kompatiblen Konfiguration des Feldgeräts aus einer Mehrzahl kompatibler Konfigurationen des Feldgeräts für die anzuwendende Verwaltungsoperation.

Eine Auswahl einer kompatiblen Konfiguration aus einer Anzahl von kompatiblen Konfigurationen kann insbesondere unter Optimierungs-Gesichtspunkten automatisch erfolgen. Beispielsweise ist es bevorzugt, eine frei konfigurierbare Ressource des Feldgeräts nur dann zu verwenden, wenn das Feldgerät keine fest konfigurierte Ressource aufweist, die der benötigten Ressource der anzuwendenden Verwaltungsoperation entspricht.

Gemäß einer weiteren Ausführungsform des Verfahrens werden vor dem Anwenden der anzuwendenden Verwaltungsoperation die für die anzuwendende Verwaltungsoperation benötigten Ressourcen auf dem Feldgerät reserviert.

Insbesondere bei Verwaltungsoperationen, die eine Operatoraktion erfordern, wie beispielsweise eine Änderung in der Hardware, ist diese Ausführungsform vorteilhaft. Auf diese Weise wird in einem Zeitraum, in dem der Operator die Hardwareänderung noch nicht vorgenommen hat, verhindert, dass eine weitere Verwaltungsoperation angewendet wird, die auf dem aktuellen Zustand vor der Hardwareänderung basiert, und die möglicherweise mit dem Feldgerät nach erfolgter Hardwareänderung nicht mehr kompatibel ist. Dies ist insbesondere bei komplexen Automatisierungssystemen mit einer Vielzahl an Feldgeräten und/oder wenn eine größere Anzahl von Verwaltungsoperationen nacheinander angewendet werden soll, vorteilhaft.

Gemäß einer weiteren Ausführungsform des Verfahrens umfasst das Anwenden der anzuwendenden Verwaltungsoperation ein Erstellen einer Handlungsanleitung umfassend alle an dem Feldgerät vorzunehmenden Operationen zum Erreichen eines Ziel-Zustands des Feldgeräts.

Die Handlungsanleitung richtet sich insbesondere an einen Operator des Feldgeräts. Die Handlungsanleitung umfasst vorzugsweise eine genaue Schritt-für-Schritt Abfolge von Operationen, um das Feldgerät in den Ziel-Zustand zu versetzen. Wenn das Feldgerät in dem Ziel-Zustand ist, dann ist die Verwaltungsoperation angewendet und die entsprechende Funktionalität bereitgestellt. Dies ist vorteilhaft, da somit ein Operator nicht zwingend ein Spezialist des jeweiligen Feldgeräts sein muss, sondern durch die Handlungsanleitung in die Lage versetzt wird, das Feldgerät in den Ziel-Zustand zu versetzen.

Gemäß einer weiteren Ausführungsform des Verfahrens wird die Handlungsanleitung an einen Operator des Feldgeräts ausgegeben.

Das Ausgeben umfasst ein Ausdrucken, ein Anzeigen auf einem Bildschirm, ein Ansagen mittels eines Lautsprechers und dergleichen mehr. Vorzugsweise kann die Handlungsanleitung über ein Netzwerk übertragen werden, beispielsweise auf ein Mobilgerät des Operators.

Gemäß einer weiteren Ausführungsform des Verfahrens werden die Beschreibung des Feldgeräts und/oder die Beschreibung der anzuwendenden Verwaltungsoperation in einer schematischen Textform, insbesondere hierarchisch geordnet, bereitgestellt.

Der Vorteil einer solchen hierarchischen Darstellung in Textform liegt insbesondere in einer übersichtlichen Darstellung. Ferner ist diese Art der Darstellung nicht an ein bestimmtes System gebunden, sondern ist generell verständlich und kann in unterschiedliche systemspezifische Darstellungen überführt werden. Damit ist insbesondere eine universelle Beschreibung des Feldgeräts und der anzuwendenden Verwaltungsoperation möglich, die von unterschiedlichen Architekturen verwendbar ist.

Beispiele für eine solche Darstellung sind das JSON (JavaScript Object Notation), HTML (Hypertext Markup Language), XML (Extended Markup Language) oder YAML Format.

Gemäß einer weiteren Ausführungsform des Verfahrens erfolgt das Bereitstellen der Beschreibung der anzuwendenden Verwaltungsoperation in Abhängigkeit einer zusätzlichen Information, insbesondere einer Eingabe eines Operators.

Die zusätzliche Information betrifft beispielsweise einen Parameter einer anzuwendenden Verwaltungsoperation. Beispielsweise kann eine anzuwendende Verwaltungsoperation den Einbau einer Signalleuchte umfassen. Es stehen unterschiedliche Signalleuchten hierzu zur Verfügung, beispielsweise eine Glühbirne, die mit 240 Volt Wechselspannung betrieben wird, sowie eine LED-Leuchte, die mit einer anderen Ansteuerspannung betrieben wird. Der Operator wählt die Signalleuchte beispielsweise unter Kosten-Gesichtspunkten aus, und die getroffene Auswahl als die zusätzliche Information ein. Damit ist die anzuwendende Verwaltungsoperation eindeutig festgelegt und das Verfahren kann durchgeführt werden.

Gemäß einer weiteren Ausführungsform des Verfahrens wird ein mit der anzuwendenden Verwaltungsoperation kompatibles Feldgerät aus einer Anzahl von kompatiblen Feldgeräten eines Automatisierungssystems ausgewählt und die anzuwendende Verwaltungsoperation wird auf dem ausgewählten Feldgerät angewendet.

Die Auswahl des Feldgeräts kann insbesondere unter Optimierungs-Gesichtspunkten und/oder Sicherheits-Gesichtspunkten erfolgen. Die Auswahl wird vorzugsweise automatisch durchgeführt. Es kann auch ein geteilter Auswahlprozess vorliegen, bei dem beispielsweise automatisch eine Teilmenge der kompatiblen Feldgeräte ausgewählt und einem Operator vorgelegt wird, der dann eines der Feldgeräte auswählt. Alternativ kann ein Operator eine Teilmenge alle kompatiblen Feldgeräte vorgeben, wobei aus der Teilmenge automatisch eines ausgewählt wird. Die Auswahl einer solchen Teilmenge kann beispielsweise eine örtliche Begrenzung widerspiegeln. So können zum Beispiel alle in einem bestimmten Bereich, wie einem Raum, einer Produktionsanlage angeordneten Feldgeräte ausgewählt werden, so dass außerhalb dieses Raums angeordnete Feldgeräte für die anzuwendende Verwaltungsoperation nicht in Betracht kommen.

Weitere Beispiele für Parameter, auf denen basierend die Auswahl getroffen werden kann, sind der Hersteller der Feldgeräte, die Seriennummer der Feldgeräte, der Firmwarestand der Feldgeräte, eine Auslastung der Feldgeräte, und dergleichen mehr.

Die Auswahl kann auch als Negativ-Auswahl erfolgen, bei der Geräte, die ein bestimmtes Merkmal oder einen bestimmten Parameterwert aufweisen, ausgeschlossen werden.

Gemäß einem zweiten Aspekt wird ein Computerprogrammprodukt vorgeschlagen, welches auf einer programmgesteuerten Vorrichtung die Durchführung des Verfahrens gemäß dem ersten Aspekt veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem weiteren Aspekt wird ein Automatisierungssystem mit einer Anzahl von Feldgeräten vorgeschlagen. Jedes Feldgerät der Anzahl ist mittels einer Steuerungsvorrichtung verwaltbar, wobei die Steuerungsvorrichtung zum Durchführen des Verfahrens gemäß dem ersten Aspekt eingerichtet ist.

Das Automatisierungssystem ist beispielsweise als eine Produktionsanlage, eine Fabrik, ein Rechenzentrum, ein Forschungsanlage, ein Gebäudesystem, ein Verkehrsleit- und Kontrollsystem und/oder ein Fahrzeugkontrollsystem ausgebildet.

Die Steuerungsvorrichtung kann dabei als eine zentrale Instanz für alle oder für einen Teil der in dem Automatisierungssystem angeordneten Feldgeräten ausgebildet sein. Zumindest eines der Feldgeräte kann aber auch eine eigene Steuerungsvorrichtung aufweisen, die zur Durchführung des Verfahrens eingerichtet ist.

Die für das vorgeschlagene Verfahren beschriebenen Ausführungsformen und Merkmale gelten für das vorgeschlagene Automatisierungssystem entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild einer Ausführungsform eines Verfahrens zum Verwalten eines Feldgeräts;
- Fig. 2: zeigt ein schematisches Blockschaltbild einer weiteren Ausführungsform eines Verfahrens zum Verwalten eines Feldgeräts;
- Fig. 3: zeigt ein schematisches Blockschaltbild einer weiteren Ausführungsform eines Verfahrens zum Verwalten eines Feldgeräts; und
- Fig. 4: zeigt ein schematisches Blockschaltbild einer Ausführungsform eines Automatisierungssystems.

In den Figuren sind gleiche oder funktionsgleiche Elemente mit denselben Bezugszeichen versehen worden, sofern nichts anderes angegeben ist.

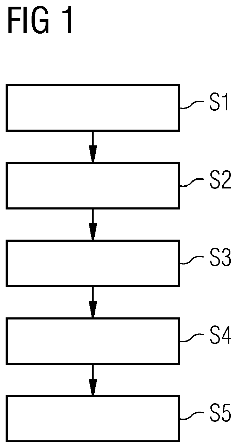

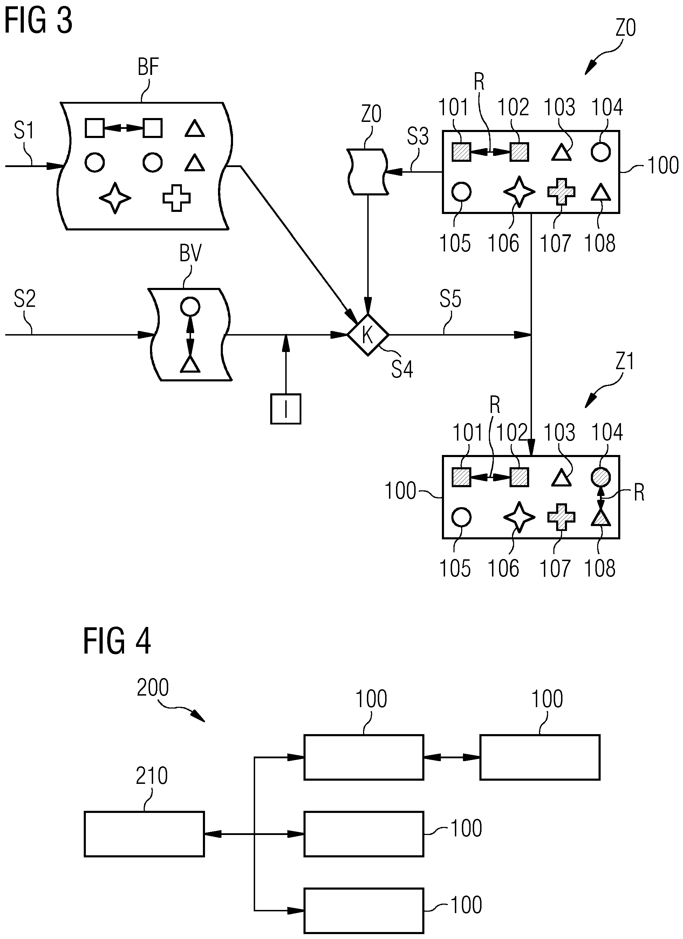

Fig. 1 zeigt ein schematisches Blockschaltbild einer Ausführungsform eines Verfahrens zum Verwalten eines Feldgeräts 100 (siehe Fig. 3 oder 4).

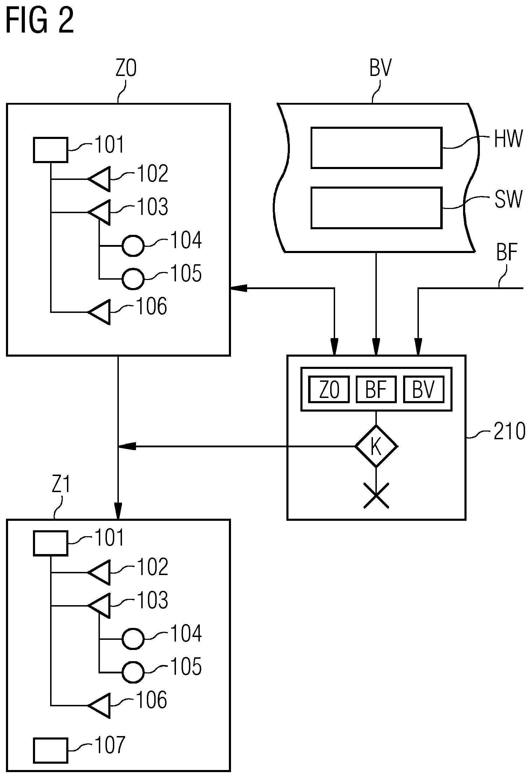

In einem ersten Schritt S1 eine Beschreibung BF (siehe Fig. 2 oder 3) des Feldgeräts 100, welche Ressourcen 101 - 108 (siehe Fig. 3) des Feldgeräts 100 umfasst, bereitgestellt. Die Beschreibung BF des Feldgeräts 100 ist beispielsweise hierarchisch geordnet. Zum Beispiel umfasst das Feldgerät einen Prozessor mit 100 MHz Taktfrequenz und einem internen Cache von 128 kByte, einen Arbeitsspeicher von 8 Mbyte, einen Festspeicher von 64 Mbyte sowie vier Pins, die als Eingang oder Ausgang konfigurierbar sind. In einem zweiten Schritt S2 wird eine Beschreibung BV (siehe Fig. 2 oder 3) einer anzuwendenden Verwaltungsoperation, welche von der anzuwendenden Verwaltungsoperation benötigte Ressourcen 101 - 108 umfasst, bereitgestellt. Die Beschreibung BV der anzuwenden Verwaltungsoperation umfasst beispielsweise die Angaben, dass eine Software SW (siehe Fig. 2) mit 12 Mbyte Speicherplatz installiert werden soll und dass ein Eingang und zwei Ausgänge sowie eine bestimmte Rechenleistung benötigt werden. In einem dritten Schritt S3 wird ein aktueller Zustand Z0 (siehe Fig. 2 oder 3) des Feldgeräts 100, welcher von angewendeten Verwaltungsoperationen abhängt, erfasst. Der aktuelle Zustand Z0 gibt beispielsweise an, dass 32 Mbyte des Festspeichers belegt sind, der Prozessor zu 25% ausgelastet ist, ein Pin als Eingang konfiguriert ist und ein Pin als Ausgang konfiguriert ist, wobei der Eingang und der Ausgang nur zu 10% ausgelastet sind. Unter der Auslastung des Eingangs und/oder des Ausgangs kann hierbei insbesondere eine zeitliche Auslastung und/oder eine Auslastung bezüglich einer maximalen Stromtragfähigkeit verstanden werden. In einem vierten Schritt S4 wird eine Kompatibilität K (siehe Fig. 2 oder 3) der anzuwendenden Verwaltungsoperation mit dem Feldgerät 100 in Abhängigkeit der Beschreibung BF des Feldgeräts 100, der Beschreibung BV der anzuwendenden Verwaltungsoperation und des aktuellen Zustands Z0 des Feldgeräts 100 ermittelt. Vorliegend wird beispielsweise ermittelt, dass das Feldgerät 100 genügend freie Ressourcen 101 - 108 aufweist. In einem fünften Schritt S5 wird die anzuwendende Verwaltungsoperation in Abhängigkeit der ermittelten Kompatibilität K angewendet, vorliegend wird also die anzuwendende Verwaltungsoperation angewendet, indem die Software SW installiert wird und die Pins entsprechend konfiguriert werden. Die Konfiguration erfolgt dabei beispielsweise derart, dass der Eingang von mehreren angewendeten Verwaltungsoperationen gemeinsam genutzt wird.

Fig. 2 zeigt ein schematisches Blockschaltbild einer weiteren Ausführungsform eines Verfahrens zum Verwalten eines Feldgeräts 100 (siehe Fig. 3 oder 4), wobei dies in diesem Beispiel mittels einer Steuerungsvorrichtung 210 durchgeführt wird. Beispielsweise soll vorliegend ein eine Bewegung eines Roboterarms überwachender Mikrokontroller um eine Temperaturerfassung erweitert werden. Der Mikrokontroller 100 liegt beispielsweise als eine Platine vor.

Der Zustand Z0 des Mikrokontrollers 100 liegt als eine hierarchische Beschreibung in Textform vor. Darin sind die verwendeten Ressourcen 101 - 106 sowie deren Hierarchie dargestellt. Demnach hängen die Ressourcen 102, 103 und 106 von der Ressource 101 ab, die Ressourcen 104 und 105 hängen von der Ressource 103 ab. Beispielsweise ist die Ressource 101 eine CPU, die Ressource 102 ist ein Signaleingang, die Ressource 103 ist eine Software-Schnittstelle die ein Überwachungssignal an die Signalausgänge 104, 105 ausgibt, und die Ressource 106 ist ein Speicherbereich der zur Ausführung der Funktionalität reserviert ist.

Eine Beschreibung BF des Mikrokontrollers 100 wird hier von außen bereitgestellt, beispielsweise durch den Hersteller des Mikrokontrollers 100. Eine Beschreibung BV der anzuwendenden Verwaltungsoperation wird beispielsweise aus einem Katalog oder einer Bibliothek von Verwaltungsoperationen bereitgestellt. Die Beschreibung BV der Verwaltungsoperation enthält vorliegend eine benötigte Hardware HW sowie eine benötigte Software SW. Die Hardware HW ist hier ein Temperaturfühler, die Software SW ist ein Programm, das in Abhängigkeit eines von dem Temperaturfühler HW an einem Eingang des Mikrokontrollers 100 bereitgestellten Signals einen Temperaturwert ermittelt. Die Software SW ist dabei vorzugsweise ein Bestandteil der Beschreibung BV der Verwaltungsoperation, beispielsweise in Form eines Containers.

Die Beschreibung BF des Mikrokontrollers 100, die Beschreibung BV der anzuwendenden Verwaltungsoperation und der Zustand Z0 des Mikrokontrollers 100 werden von der Steuerungsvorrichtung 210 ausgewertet, um eine Kompatibilität K des Mikrokontrollers 100 mit der anzuwendenden Verwaltungsoperation zu ermitteln. Vorliegend ist der Mikrokontroller 100 kompatibel, so dass die anzuwendende Verwaltungsoperation angewendet werden kann. Die Steuerungsvorrichtung 210 installiert daher die Software SW auf dem Mikrokontroller 100 und erstellt eine Handlungsanweisung für einen Operator, welcher Temperaturfühler HW zu installieren ist und wie dieser an dem Mikrokontroller 100 zu installieren ist. Die Handlungsanweisung enthält also beispielsweise eine Typen-Kennung für den Temperaturfühler HW und eine Angabe, mit welchen Pins oder Kontakten auf der Platine des Mikrokontrollers 100 die Kontakte des Temperaturfühlers HW zu kontaktieren sind.

Durch das Anwenden der Verwaltungsoperation geht der Mikrokontroller 100 von dem Zustand Z0 in den Zustand Z1 über, der eine weitere Ressource 107 umfasst, die vorliegend dem installierten Temperaturfühler HW inklusive zugehöriger Software SW entspricht.

Fig. 3 zeigt ein schematisches Blockschaltbild einer weiteren Ausführungsform eines Verfahrens zum Verwalten eines Feldgeräts 100.

In der Fig. 3 weist das Feldgerät 100 acht Ressourcen 101 - 108 auf, die durch unterschiedliche Symbole dargestellt sind. Ein leeres Symbol repräsentiert eine freie Ressource, ein schraffiertes Symbol repräsentiert eine belegte Ressource. Hier sind die Ressourcen 101, 102 und 107 in dem Ausgangszustand Z0 des Feldgeräts 100 belegt, wobei die Ressourcen 101, 102 zusätzlich eine Relation R oder gegenseitige Abhängigkeit aufweisen. Die Relation R kann beispielsweise eine Abhängigkeit einer jeweiligen Taktfrequenz von einem gemeinsamen Taktgeber darstellen. Das Feldgerät 100 ist beispielsweise eine Steuerung in einer Fertigungsanlage.

Es liegt eine Beschreibung BF der Steuerung 100 vor, die alle Ressourcen 101 - 108 sowie Relationen R zwischen Ressourcen umfasst. Die Beschreibung BF der Steuerung 100 wurde beispielsweise von dem Hersteller der Steuerung 100 bereitgestellt, was durch den Pfeil S1 dargestellt ist.

Die anzuwendende Verwaltungsoperation betrifft das Installieren einer zusätzlichen Meldeleuchte in der Fertigungsanlage, welche eine Störung anzeigt, sobald die Leistung der Fertigungsanlage unter einen bestimmten Wert fällt. Die entsprechenden Kennzahlen der Fertigungsanlage werden beispielsweise durch entsprechende Sensoren erfasst, von einer Analysesoftware analysiert und an eine Monitorsoftware gemeldet, welche die Störung anzeigt und auch eine Quittierung der Störung ermöglicht. Die anzuwendende Verwaltungsoperation wird durch eine entsprechende Beschreibung BV beschrieben, die beispielsweise von dem Hersteller der Fertigungsanlage bereitgestellt S2 wird.

Die Beschreibung BV der anzuwendenden Verwaltungsoperation enthält Freiheitsgrade, die beispielsweise durch einen Operator der Fertigungsanlage festgelegt werden können. Vorliegend wählt der Operator zum Beispiel eine Meldeleuchte aus einer Anzahl von möglichen oder verfügbaren Meldeleuchten aus, womit die elektrischen Eigenschaften der Meldeleuchte festgelegt werden, wie beispielsweise 24 V Wechselspannung oder 24 V Gleichspannung und 3 W Leistung. Weiterhin kann der Operator einen Quittiertaster auswählen, der beispielsweise eine maximale Spannung von 48 V aufweist. Diese Informationen I werden daher vorliegend von dem Operator eingegeben, womit die anzuwendende Verwaltungsoperation eindeutig bestimmt ist.

Die Fertigungsanlage bildet ein vernetztes Automatisierungssystem 200 (siehe Fig. 4), welches eine Mehrzahl an Feldgeräten 100, wie die Steuerung 100, umfasst. Weiterhin umfasst das Automatisierungssystem 200 eine Steuerungsvorrichtung 210 (siehe Fig. 4), die beispielsweise eine Implementierung des Verfahrens auf einem Rechner oder Server in dem Automatisierungssystem 200 ist. Eine jeweilige Beschreibung BF der in dem Automatisierungssystem 200 angeordneten Feldgeräte 100 und die Beschreibung BV der anzuwendenden Verwaltungsoperation inklusive den Informationen I werden der Steuerungsvorrichtung 210 bereitgestellt.

Die Steuerungsvorrichtung 210 erfasst dann einen jeweiligen aktuellen Zustand Z0 der Feldgeräte 100. Vorliegend wird beispielswiese jeweils eine Log-Datei ausgewertet, die auf einem Server in dem Automatisierungssystem 200 gespeichert ist. Es wird dann die Kompatibilität K ermittelt S4.

Beispielsweise umfasst die Fertigungsanlage 200 eine Mehrzahl an Steuerungen 100, die potentiell geeignet sind, um die gewünschte Funktionalität auszuführen. Es wird überprüft, welche der Steuerungen 100 die benötigten Ressourcen aufweisen, insbesondere, ob eine Anschlussklemme zur Steuerung der Meldeleuchte und ein Anschluss für den Quittiertaster frei sind. Es wird die Steuerung 100 gefunden, bei der die benötigten Ressourcen 104 und 108 noch frei sind. Die Steuerungsvorrichtung 210 wendet die anzuwendende Verwaltungsoperation an S5, indem die Ressourcen 104, 108 in der kompatiblen Steuerung 100 reserviert werden, die Steuerungssoftware zum Steuern der Meldeleuchte installiert wird und eine Handlungsanleitung für den Operator der Fertigungsanlage 200 erzeugt und an diesen ausgegeben wird. Die Handlungsanleitung beschreibt detailliert, an welche Anschlussklemmen und in welchem Schaltschrank oder Verteilerbox der Operator die Meldeleuchte und den Quittiertaster anschließen muss. Damit wird die Steuerung 100 in den Zustand Z1 überführt, in dem gegenüber dem Zustand Z0 die Ressourcen 104 und 108 belegt und mittels einer Relation R verknüpft sind.

In Ausführungsformen des Verfahrens wird nicht jede einzelne Steuerung der Fertigungsanlage als ein Feldgerät 100 betrachtet, sondern die Fertigungsanlage bildet insgesamt ein Feldgerät, wobei die Steuerungen 100 Ressourcen der Fertigungsanlage darstellen, die wiederum eigene, zugeordnete Ressourcen umfassen.

Fig. 4 zeigt ein schematisches Blockschaltbild einer Ausführungsform eines Automatisierungssystems 200. Das Automatisierungssystem 200 umfasst in diesem Beispiel vier Feldgeräte 100 und eine Steuerungsvorrichtung 210, die zum Verwalten der Feldgeräte 100 eingerichtet ist, wie beispielsweise anhand der Fig. 1 - 3 beschrieben.

Die vier Feldgeräte 100 und die Steuerungsvorrichtung 210 sind untereinander mittels einer Kommunikationsverbindung verbunden, über die sie Daten, Anfragen und dergleichen austauschen können. Eines der Feldgeräte 100 ist dabei ein abhängiges Feldgerät, das mittels eines anderen Feldgeräts 100 verwaltbar ist.

Wenn eine Verwaltungsoperation angewendet werden soll, dann kann die Steuerungsvorrichtung 210 das geschilderte Verfahren an allen vier Feldgeräten 100 bis zum Ermitteln der Kompatibilität K durchführen. Sofern mehrere Feldgeräte 100 kompatibel sind, wählt die Steuerungsvorrichtung 210 eines der kompatiblen Feldgeräte 100 aus und wendet die anzuwendende Verwaltungsoperation an diesem Feldgerät 100 an. Wenn sich kein kompatibles Feldgerät 100 ergibt, kann die Steuerungsvorrichtung 210 beispielsweise prüfen, ob durch eine Optimierungsmaßnahme innerhalb des Automatisierungssystems 200 eine Kompatibilität K erreicht werden kann. Beispielsweise wird dabei ermittelt, dass eine auf dem einen Feldgerät 100 angewendete Verwaltungsoperation auf ein anderes Feldgerät 100 verschoben werden kann, um ein kompatibles Feldgerät 100 zu erhalten.

Obwohl die vorliegende Erfindung anhand von Ausführungsbeispielen beschrieben wurde, ist sie vielfältig modifizierbar.

## Patentansprüche

1. Verfahren zum Verwalten eines Feldgeräts (100), mit:
Bereitstellen (S1) einer Beschreibung (BF) des Feldgeräts (100), welche Ressourcen (101 - 108) des Feldgeräts (100) umfasst,
Bereitstellen (S2) einer Beschreibung (BV) einer anzuwendenden Verwaltungsoperation, welche von der anzuwendenden Verwaltungsoperation benötigte Ressourcen (101 - 108) umfasst, Erfassen (S3) eines aktuellen Zustands (Z0) des Feldgeräts (100), welcher von angewendeten Verwaltungsoperationen abhängt,
Ermitteln (S4) einer Kompatibilität (K) der anzuwendenden Verwaltungsoperation mit dem Feldgerät (100) in Abhängigkeit der Beschreibung (BF) des Feldgeräts (100), der Beschreibung (BV) der anzuwendenden Verwaltungsoperation und des aktuellen Zustands (Z0) des Feldgeräts (100), und
Anwenden (S5) der anzuwendenden Verwaltungsoperation in Abhängigkeit der ermittelten Kompatibilität (K).

2. Verfahren nach Anspruch 1,
**dadurch gekennzeichnet,**
**dass** das Feldgerät (100) in eine Cloud-Computing-Umgebung eingebunden ist.

3. Verfahren nach Anspruch 1 oder 2,
**dadurch gekennzeichnet,**
**dass** zum Ermitteln der Kompatibilität (K) ein Vergleich von freien Ressourcen (101 - 108) des Feldgeräts (100) mit von der anzuwendenden Verwaltungsoperation benötigten Ressourcen (101 - 108) durchgeführt wird.

4. Verfahren nach einem der Ansprüche 1 - 3,
**dadurch gekennzeichnet,**
**dass** zum Ermitteln der Kompatibilität (K) ein Vergleich aller Ressourcen (101 - 108) des Feldgeräts mit allen Ressourcen (101 - 108), die von angewendeten Verwaltungsoperationen und der anzuwendenden Verwaltungsoperation benötigt werden, durchgeführt wird.

5. Verfahren nach einem der Ansprüche 1 - 4,
**dadurch gekennzeichnet,**
**dass** das Erfassen des aktuellen Zustands (Z0) des Feldgeräts (100) ein Abfragen des Feldgeräts (100) und/oder ein Auswerten einer Log-Datei umfasst.

6. Verfahren nach Anspruch 5,
**dadurch gekennzeichnet,**
**dass** die Log-Datei den aktuellen Zustand (Z0) des Feldgeräts (100), wenigstens einen früheren Zustand des Feldgeräts (100) oder eine Sequenz früherer Zustände des Feldgeräts (100) umfasst.

7. Verfahren nach einem der Ansprüche 1 - 6,
**dadurch gekennzeichnet,**
**dass** das Anwenden der anzuwendenden Verwaltungsoperation ein Auswählen genau einer kompatiblen Konfiguration des Feldgeräts (100) aus einer Mehrzahl kompatibler Konfigurationen des Feldgeräts (100) für die anzuwendende Verwaltungsoperation umfasst.

8. Verfahren nach einem der Ansprüche 1 - 7,
**dadurch gekennzeichnet,**
**dass** vor dem Anwenden der anzuwendenden Verwaltungsoperation die für die anzuwendende Verwaltungsoperation benötigten Ressourcen (101 - 108) auf dem Feldgerät (100) reserviert werden.

9. Verfahren nach einem der Ansprüche 1 - 8,
**dadurch gekennzeichnet,**
**dass** das Anwenden der anzuwendenden Verwaltungsoperation ein Erstellen einer Handlungsanleitung umfassend alle an dem Feldgerät (100) vorzunehmenden Operationen zum Erreichen eines Ziel-Zustands des Feldgeräts (100) umfasst.

10. Verfahren nach Anspruch 9,
**dadurch gekennzeichnet,**
**dass** die Handlungsanleitung an einen Operator des Feldgeräts (100) ausgegeben wird.

11. Verfahren nach einem der Ansprüche 1 - 10,
**dadurch gekennzeichnet,**
**dass** die Beschreibung (BF) des Feldgeräts (100) und/oder die Beschreibung (BV) der anzuwendenden Verwaltungsoperation in einer schematischen Textform, insbesondere hierarchisch geordnet, bereitgestellt werden.

12. Verfahren nach einem der Ansprüche 1 - 11,
**dadurch gekennzeichnet,**
**dass** das Bereitstellen der Beschreibung (BV) der anzuwendenden Verwaltungsoperation in Abhängigkeit einer zusätzlichen Information (I), insbesondere einer Eingabe eines Operators, erfolgt.

13. Verfahren nach einem der Ansprüche 1 - 12, **gekennzeichnet durch**:
Auswählen eines mit der anzuwendenden Verwaltungsoperation kompatiblen Feldgeräts (100) aus einer Anzahl von kompatiblen Feldgeräten (100) eines Automatisierungssystems (200), und
Anwenden der anzuwendenden Verwaltungsoperation auf dem ausgewählten Feldgerät (100).

14. Computerprogrammprodukt, welches auf einer programmgesteuerten Vorrichtung die Durchführung des Verfahrens gemäß einem der Ansprüche 1 - 13 veranlasst.

15. Automatisierungssystem (200) mit einer Anzahl von Feldgeräten (100), wobei jedes Feldgerät (100) der Anzahl mittels einer Steuerungsvorrichtung (210) verwaltbar ist, wobei die Steuerungsvorrichtung (210) zum Durchführen des Verfahrens gemäß einem der Ansprüche 1 - 13 eingerichtet ist.
